# FASCICULE DE BREVET EUROPEEN

(11) **EP 0 644 082 B1**
(45) Date de publication et mention de la délivrance du brevet: **25.03.1998**
(21) Numéro de dépôt: 94401891.0
(22) Date de dépôt: 24.08.1994
(51) Int. Cl.: B60N 2/44, B60N 2/28

(54) **Dispositif de maintien latéral pour un siège de véhicule automobile**
Vorrichtung zum seitlichen Festhalten von einem Kraftfahrzeugsitz
Lateral restraint device for a motor vehicle seat

(30) Priorité: 16.09.1993 FR 9311054
(43) Date de publication de la demande: 22.03.1995
(73) Titulaire: AUTOMOBILES PEUGEOT, 75116 Paris (FR); AUTOMOBILES CITROEN, 92200 Neuilly-sur-Seine (FR)
(72) Inventeur: Louismet, Jacques, F-92400 Courbevoie (FR)
(74) Mandataire: Bouget, Lucien

(56) Documents cités:
- EP-A- 0 232 237
- FR-A- 1 571 673
- FR-A- 2 334 528
- FR-A- 2 575 711
- FR-A- 2 690 398
- US-A- 4 565 405
- US-A- 4 779 930
- US-A- 4 904 021
- US-A- 5 127 120
- US-A- 5 137 335

## Description

L'invention concerne un dispositif de maintien latéral pour un siège de véhicule automobile utilisable par un enfant (voir par exemple US-A-4 904 021, correspondant au préambule de la revendication indépendante).

Lorsqu'on désire faire voyager des enfants à l'intérieur d'un véhicule automobile, il est nécessaire de prévoir pour ces enfants des sièges adaptés à leurs caractéristiques physiques et qui permettent d'utiliser une ceinture de sécurité pour assurer le maintien des enfants sur leur siège.

Pour les très jeunes enfants, jusqu'à trois ans, on utilise généralement des sièges comprenant une assise et un dossier solidaires l'un de l'autre qui peuvent être mis en position et fixés sur un des sièges du véhicule et généralement sur la banquette arrière. Le dossier de ces sièges pour enfant peut être muni de bourrelets latéraux permettant de retenir l'enfant, par exemple dans le cas où il s'endort ou dans le cas d'un choc entraînant des efforts latéraux.

Pour les enfants plus âgés, par exemple ayant de trois à dix ans, on utilise uniquement un réhausseur, c'est-à-dire seulement une assise éventuellement munie d'un dossier bas qui est fixé sur un siège pour adulte du véhicule.

Lorsque l'enfant s'endort, son bassin est maintenu dans le réhausseur mais son buste est libre de tout mouvement, si bien que l'enfant se trouve souvent dans une position inconfortable. Les parents peuvent alors être tentés de déboucler la ceinture de l'enfant pour lui donner le moyen de s'endormir dans une position confortable. L'enfant n'est plus alors maintenu en cas d'accident.

Du fait qu'un siège en une seule pièce pour un enfant de trois à dix ans serait très encombrant et difficile à loger dans le véhicule, en particulier lorsqu'il n'est pas utilisé, on ne disposait pas jusqu'ici de moyen permettant d'adapter un siège pour adulte pour son utilisation par un grand enfant, de manière que le siège adapté pour l'enfant présente à la fois un très bon confort et une très bonne sécurité.

Dans les US-A-5 137 335, FR-A-1 571 673 et US-A-4 904 021, on a proposé des moyens d'appui latéraux destinés à équiper un siège de véhicule automobile, par exemple pour le rendre utilisable par un enfant. De tels dispositifs d'appui latéraux peuvent être constitués par deux bourrelets en matière souple.

Dans le cas du US-A-4 904 021, les bourrelets d'appui latéraux comportent un corps en une mousse de matière plastique et un support en matériau rigide mis en forme à l'une de ses extrémités pour constituer un crochet d'accrochage du bourrelet sur le dossier du siège de véhicule automobile.

Cependant, de tels moyens d'appui ne permettent pas d'assurer un maintien latéral efficace d'un enfant quelles que soient sa morphologie et sa taille.

On ne connaissait donc pas de moyen simple pouvant être monté et démonté facilement et rapidement pour assurer le maintien latéral d'un enfant voyageant dans un véhicule automobile.

Le but de l'invention est de proposer un dispositif de maintien latral pour un véhicule automobile qui soit très efficace pour maintenir un enfant et qui puisse être monté et démonté très rapidement et très facilement.

Dans ce but, l'invention est relative à un dispositif de maintien latéral pour un siège de véhicule automobile comportant deux bourrelets ayant une section transversale profilée, comprenant chacun un corps en une mousse de matière plastique et un support en un matériau rigide sur lequel est fixé le corps en matériau souple du bourrelet réalisé sous la forme d'une plaque mise en forme à l'une de ses extrémités pour constituer un crochet d'accrochage du bourrelet correspondant sur la partie supérieure du dossier du siège de véhicule automobile, en appui sur le dossier de véhicule dans des dispositions sensiblement parallèles suivant la hauteur du dossier et avec un écartement déterminé, caractérisé par le fait qu'il comporte au moins deux bandes de jonction entre les deux bourrelets présentant une longueur réglable et constituées chacune de deux parties reliées à l'une de leurs extrémités à un bourrelet, au moins partiellement en une matière textile d'accrochage pour assurer la fixation des parties de bandes de jonction l'une sur l'autre.

Afin de bien faire comprendre l'invention, on va maintenant décrire à titre d'exemple, en se référant aux figures jointes en annexe, un mode de réalisation d'un dispositif de maintien latéral suivant l'invention et d'un siège de véhicule automobile adapté pour le transport d'un enfant.

La figure 1 est une vue de face d'un enfant en position de transport dans un siège adapté comportant des dispositifs de maintien latéral suivant l'invention.

La figure 2 est une vue de trois-quarts de la partie supérieure du siège adapté et de l'enfant représenté sur la figure 1.

Les figures 3 à 7 sont relatives à un mode de réalisation d'un dispositif de maintien latéral suivant l'invention.

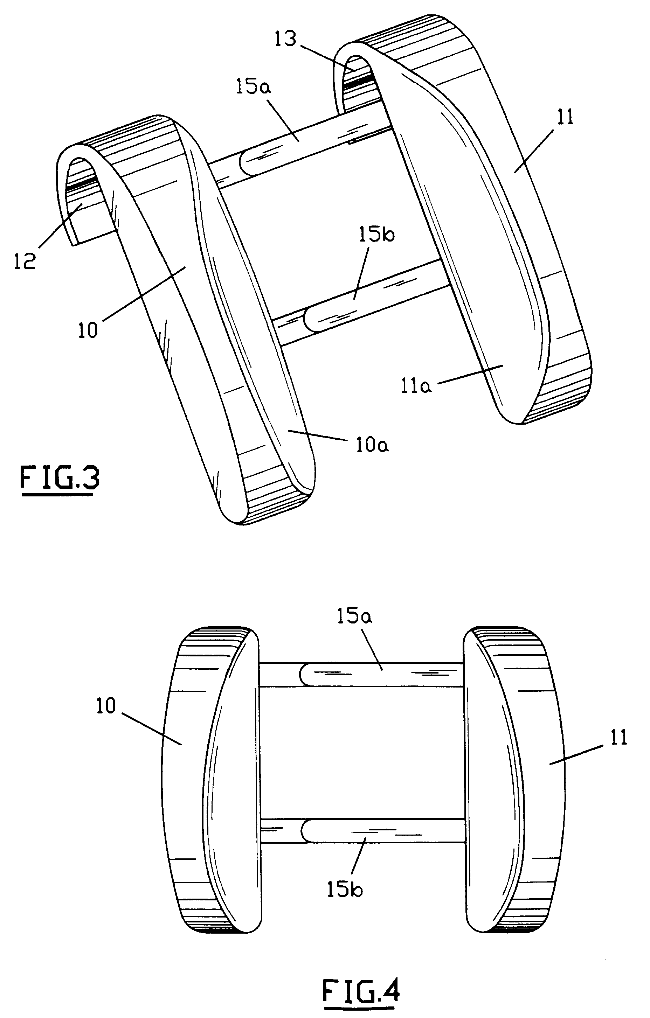

La figure 3 est une vue en perspective du dispositif.

La figure 4 est une vue de face du dispositif.

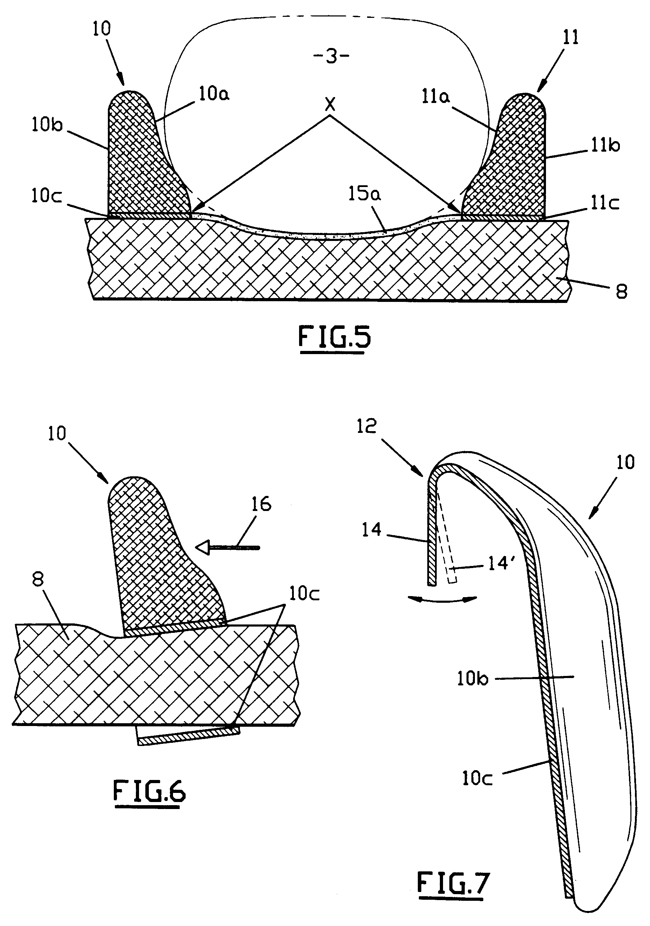

La figure 5 est une vue en coupe transversale du dispositif de maintien latéral.

La figure 6 est une vue en coupe transversale partielle d'une partie supérieure du dispositif de maintien latéral.

La figure 7 est une vue de côté d'un bourrelet du dispositif de maintien latéral.

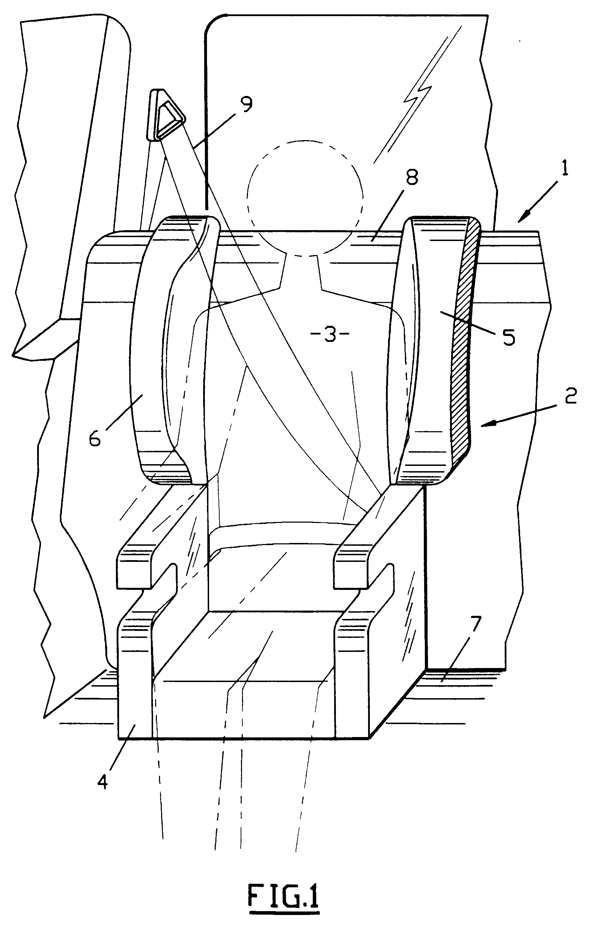

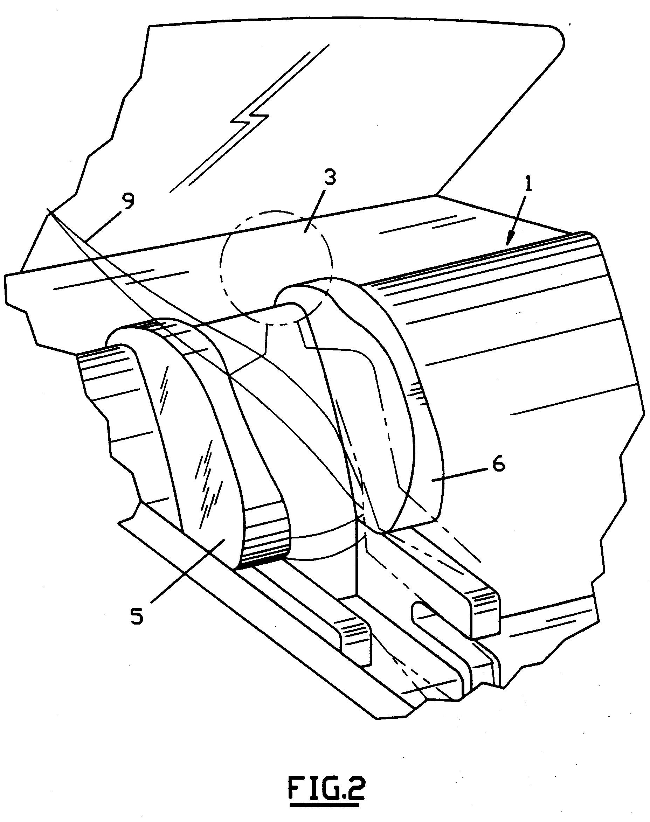

Sur les figures 1 et 2, on voit une partie de la banquette arrière 1 d'un véhicule automobile dont une partie est adaptée pour constituer un siège pour un enfant 3, désigné de manière générale par le repère 2.

Le siège 2 pour enfant comporte une réhausse 4 et deux bourrelets latéraux 5 et 6 d'un dispositif de maintien latéral suivant l'invention.

La réhausse 4 définit l'assise du siège pour enfant 2 reposant sur l'assise 7 de la banquette arrière 1 et comprend des accoudoirs.

Deux bourrelets 5 et 6 d'un dispositif de maintien latéral suivant l'invention sont fixés sur le dossier 8 de la banquette arrière 1, suivant la hauteur du dossier 8, avec un écartement réglé permettant un maintien latéral efficace de l'enfant 3 utilisant le siège adapté 2. Les bourrelets 5 et 6 sont disposés sensiblement dans le prolongement des accoudoirs du réhausseur 4.

La sécurité de l'enfant 3 est assurée grâce à l'une des ceintures 9 des places arrière du véhicule.

Sur les figures 3 et 4, on a représenté deux bourrelets 10 et 11 d'un dispositif de maintien latéral suivant l'invention et suivant un premier mode de réalisation qui peuvent être mis en place sur le dossier 8 de la banquette arrière d'un véhicule automobile pour assurer le maintien latéral d'un enfant, de la même manière que les bourrelets 5 et 6 représentés sur les figures 1 et 2.

Chacun des bourrelets 10 et 11 présente une forme allongée et une section transversale profilée qui est visible en particulier sur les figures 5 et 6.

Les bourrelets 10 et 11 comportent, sur leurs faces internes, destinées à être placées en vis-à-vis l'une de l'autre, un dégagement latéral respectivement 10a et 11a évasé vers l'extérieur, en direction de l'avant du véhicule.

Les dégagements 10a et 11a assurent une meilleure réception du corps de l'enfant et un plus grand confort.

Les bourrelets 10 et 11 comportent un corps en mousse de matière plastique respectivement 10b et 11b fixés sur une plaque thermoformée d'une certaine rigidité respectivement 10c et 11c.

Les plaques thermoformées 10c et 11c constituent à leur partie supérieure, des parties d'accrochage courbes respectivement 12 et 13.

Comme il est visible sur la figure 7, la partie d'accrochage telle que 12 constituant une pince de fixation du bourrelet 10 correspondant peut être plus ou moins ouverte, pour être adaptée à la dimension et à la forme du dossier de la banquette arrière d'un véhicule.

La branche 14 du dispositif d'accrochage 12 de la plaque thermoformée 10c représentée sur la figure 7 peut être placée dans une position d'ouverture telle que 14 ou 14' réglable lors de la mise en forme de la plaque 10c, en fonction de l'épaisseur du dossier 8 de la banquette du véhicule sur laquelle on réalise l'accrochage du dispositif de maintien latéral.

Les bourrelets en mousse tels que 10b et 11b peuvent être fixés par collage sur la plaque thermoformée 10c ou 11c, de manière à recouvrir substantiellement la face antérieure de la plaque thermoformée.

Les blocs de mousse 10b et 11b des bourrelets 10 et 11 sont généralement revêtus d'une coiffe analogue à la coiffe de garnissage d'un siège de véhicule automobile.

Les corps en mousse des bourrelets peuvent être fixés sur les plaques thermoformées par l'intermédiaire du tissu de la coiffe recouvrant le corps en mousse.

Les deux bourrelets 10 et 11 du dispositif de maintien latéral sont reliés par des bandes de jonction telles que 15a et 15b qui sont fixées à l'une de leurs extrémités sur les plaques thermoformées 10c ou 11c correspondantes.

Les deux parties des bandes 15a et 15b reliées à l'une de leurs extrémités aux plaques thermoformées des bourrelets 10 et 11 peuvent être fixées l'une sur l'autre dans une position réglable permettant de faire varier l'écartement des bourrelets 10 et 11 et donc la largeur du dispositif de maintien latéral entre lesquels le dos de l'enfant s'appuie sur le dossier 8 du siège de véhicule automobile.

On peut ainsi adapter facilement le dispositif de maintien latéral du siège aux caractéristiques physiques de l'enfant.

De préférence, les parties de bande constituant les deux bandes de jonction 15a et 15b sont réalisées en un matériau permettant la fixation de ces parties de bande l'un sur l'autre par agrafage automatique de crochets. On utilisera de préférence pour réaliser ces bandes, un matériau textile tel que le Velcro.

Les blocs de mousse 10b et 11b constituant le corps des bourrelets 10 et 11 peuvent être réalisés en une mousse telle que la mousse de polyuréthane.

Les plaques thermoformées telles que 10c et 11c peuvent être réalisées en un matériau thermoplastique tel que l'ABS (Poly Acrylonitrile Butadiene Styrène), ce matériau étant couramment utilisé pour réaliser des éléments de carrosserie dans l'industrie automobile.

Le dispositif de maintien latéral représenté sur les figures 3 à 7 peut être mis en place très rapidement par simple engagement de la partie d'accrochage 12 des plaques thermoformées, sur la partie supérieure du dossier 8 de la banquette arrière du véhicule automobile, de manière que les bourrelets 10 et 11 soient disposés suivant la direction de la hauteur du dossier.

Les parties constitutives des bandes 15a et 15b sont fixées l'une sur l'autre, de manière à régler l'écartement des bourrelets 10 et 11 à la valeur voulue. Les bandes de jonction 15a et 15b viennent s'appliquer contre le dossier 8 de la banquette arrière et améliorent la fixation du dispositif de maintien contre le dossier 8.

Comme il est visible sur la figure 5, le torse 3 de l'enfant est parfaitement maintenu entre les dégagement latéraux 10a et 11a des bourrelets 10 et 11 et contre le dossier 8 du siège de véhicule automobile. Les bourrelets 10 et 11 permettent de maintenir l'enfant de manière très efficace, dans le cas où le véhicule subit des accélérations transversales par exemple dans des courbes ou en cas de choc latéral. De plus, l'enfant peut être parfaitement maintenu vers l'avant par une ceinture de sécurité du siège arrière du véhicule.

Dans le cas où l'enfant s'endort sur son siège, les bourrelets latéraux 10 et 11 assurent un maintien et un très bon confort de la position de l'enfant endormi dans le siège. Lorsque le dispositif de maintien latéral n'est pas utilisé pour adapter un siège de véhicule automobile à l'utilisation par un enfant, ces bourrelets peuvent être rangés sans difficulté dans le coffre du véhicule, du fait qu'ils peuvent être facilement séparés et qu'ils présentent une forme compacte.

Comme il est visible sur la figure 6, les bourrelets tels que 10 présentent une bonne résistance dans le cas d'un effort transversal (figuré par la flèche 16) du fait que la plaque thermoformée 10c constitue une pince qui est en prise sur le dossier 8 de la banquette du véhicule. Le simple engagement de la partie d'accrochage 12 en forme de crochet de la plaque thermoformée 10c permet donc de fournir un très bon arcboutement du bourrelet.

En outre, le dispositif de maintien latéral peut être réalisé de manière très simple par formage à chaud d'une plaque thermoplastique pour lui donner la forme voulue.

Les éléments de bande constituant les bandes de jonction 15a et 15b sont agrafés aux plaques thermoformées. Comme indiqué plus haut, les bourrelets de mousse peuvent être collés ou fixés de toute autre manière sur les plaques thermoformées.

Le dispositif de maintien latéral suivant l'invention présente une très bonne efficacité, peut être facilement réglé suivant les caractéristiques physiques de l'enfant et peut être fixé très facilement et très rapidement sur le dossier d'un siège de véhicule.

En outre, lorsque ce dispositif n'est pas utilisé il peut être facilement logé dans une partie du véhicule, par exemple dans le coffre.

## Revendications

1. Dispositif de maintien latéral pour un siège de véhicule automobile, comportant deux bourrelets (5, 6 ; 10, 11) ayant une section transversale profilée, comprenant chacun un corps (10b, 11b) en une mousse de matière plastique et un support (10c, 11c) en un matériau rigide sur lequel est fixé le corps en matériau souple du bourrelet réalisé sous la forme d'une plaque mise en forme à l'une de ses extrémités pour constituer un crochet (12) d'accrochage du bourrelet (5, 6 ; 10, 11) correspondant sur la partie supérieure du dossier (8) du siège de véhicule automobile, en appui sur le dossier (8) du siège de véhicule dans des dispositions sensiblement parallèles suivant la hauteur du dossier et avec un écartement déterminé, caractérisé par le fait qu'il comporte au moins deux bandes de jonction (15a, 15b) entre les deux bourrelets (5, 6; 10, 11) présentant une longueur réglable et constituées chacune de deux parties reliées à l'une de leurs extrémités à un bourrelet (5, 6; 10, 11), lesdites parties étant constituées au moins partiellement en une matière textile d'accrochage pour en assurer la fixation l'une sur l'autre.

## Claims

1. Lateral restraint device for a motor vehicle seat comprising two cushioning pads (5, 6; 10, 11) having a profiled transverse section, each comprising a body (10b, 11b) made of plastics foam material and a support (10c, 11c) of rigid material on which the body of flexible material is secured, produced in the form of a plate shaped at one of its ends to constitute a hook (12) for attachment of the associated pad (5, 6; 10, 11) on the upper part of the back (8) of the motor vehicle seat, in engagement on the back (8) of the vehicle seat in dispositions substantially parallel following the height of the seat back and at a predetermined spacing, characterised by the fact that it has at least two connecting strips (15a, 15b) between the two pads (5, 6; 10, 11) having an adjustable length and each made up of two parts joined at one of their ends to a pad (5, 6; 10, 11), the said parts being formed at least partially of a hooked textile material to achieve the connection of the one to the other.

## Patentansprüche

1. Seitenabstützvorrichtung für einen Kraftfahrzeugsitz, die zwei Polster (5, 6; 10, 11) mit einem stromlinienförmigen Querschnitt aufweist, von denen jedes einen Körper (10b, 11b) von einem Kunststoffschaum und einen Träger (10c, 11c) von einem steifen Material aufweist, wobei der Körper des Polsters von elastischem Material an dem Träger befestigt ist, und dieser in der Form einer Platte ausgeführt ist, die an einem ihrer Enden umgeformt ist, so daß ein Hakens (12) zum Einhängen des entsprechenden Polsters (5, 6; 10, 11) an dem oberen Teil der Rückenlehne (8) des Kraftfahrzeugsitzes gebildet ist, wobei die Polster an der Rückenlehne (8) des Kraftfahrzeugsitzes in im wesentlichen paralleler Anordnung entlang der Höhenrichtung der Rückenlehne und mit einem vorbestimmten Abstand abgestützt sind, dadurch gekennzeichnet, daß die Vorrichtung mindestens zwei Verbindungsbänder (15a, 15b) zwischen den Polstern (5, 6; 10; 11) aufweist, die eine einstellbare Länge aufweisen und von denen jedes von zwei Teilen gebildet ist, die an einem ihrer Enden mit einem Polster (5, 6; 10, 11) verbunden sind, wobei die Teile zum Sicherstellen der Befestigung des einen an dem anderen zumindest teilweise von einem textilen Haftmaterial gebildet sind.
